# EUROPEAN PATENT APPLICATION

(11) **EP 2 567 634 A1**
(43) Date of publication of application: **13.03.2013**
(21) Application number: 11180752.5
(22) Date of filing: 09.09.2011
(51) Int. Cl.: A47B 87/02

(54) **Furniture module and furniture module system**

(71) Applicant: Voice AB, 550 08 Jönköping (SE)
(72) Inventor: Ståhl, Jesper, 554 48 Jönköping (SE)
(74) Representative: Bokinge, Ole

(57) **Abstract**

A furniture module (100) adapted for being interconnected to another, similar furniture module (100b) in a state where outer faces of said modules face and abut each other, wherein the furniture module (100) comprises a bushing (106), which is fixedly received in a bore in a wall (101, 102, 103, 104) of the module, wherein said bushing (106) presents a through hole (207), for receiving a fastener, wherein said bushing (106) has a first axial end face (208), which is substantially flush with or recessed relative the outer face of the module wall (101, 102, 103, 104), and an opposing axial second end face (209), and wherein the through hole (207), at its opening to at least one of the end faces (208, 209), presents a portion (210) of increased inner diameter, sized and adapted for receiving a head (415, 418, 615) of the fastener, such that the head, when received in the through hole (207) is substantially flush with or recessed relative that end face (208, 209).

## Description

### Technical field of the invention

The present invention relates to furniture modules and furniture module systems, where several furniture modules are coupled to each other.

### Technology Background

The combination of people moving a lot more today than earlier and that interior design has become an important part of many peoples' lives has resulted in that many people have significant costs for buying new furniture. Therefore, a market for modular furniture which can be redesigned over time to satisfy shifting needs, has been introduced and thereby several actors are offering modular furniture.

Another advantage of modular furniture is that the manufacturer is able to offer a furniture system, comprising a limited number of parts, which may be adapted almost infinitely to fit each user's particular needs.

It is known to provide modular furniture systems where the modules are interconnected by means of double-sided adhesive tape, magnetic means, clip means, clamping bolts, and also where the modules are interconnected by a nut-and-bolt connection. For example, as shown in fig 18 in US 3,822,924 a flat headed countersunk nut and bolt type fastener is known for connecting furniture modules. Although this solution enables users to redesign modular furniture, repeated dissembly and assembly can be expected to damage the wall around the fastener.

Thereby, there is a need for modular furniture that can easily be redesigned to satisfy shifting needs, while remaining aesthetically appealing.

### Summary of the invention

An object of the invention is to achieve modular furniture with a coupling that makes it easy to redesign modular furniture.

The inventive concept is further based on the inventors' realization that by constructing a furniture module that comprise a bushing arranged in a wall of the module and adapted to receive a fastener, a furniture module can be offered which is adapted for being interconnected to another similar furniture module where the modular furniture is easy to assemble, disassemble and reassemble.

According to a first aspect of the present inventive concept, the above-mentioned and other objects are achieved through a furniture module, adapted for being interconnected to another, similar furniture module in a state where outer faces of the modules face and abut each other, wherein the furniture module comprises a bushing, which is fixedly received in a bore in a wall of the module, wherein the bushing presents a through hole, for receiving a fastener, wherein the bushing has a first axial end face, which is substantially flush with or recessed relative the outer face of the module wall, and an opposing axial second end face, and wherein the through hole, at its opening to at least one of the end faces, presents a portion of increased inner diameter, sized and adapted for receiving a head of the fastener, such that the head, when received in the through hole is substantially flush with or recessed relative that end face.

In this context a "furniture module" should be understood as any separable unit of a furniture system which is intended to be coupled to other units to form a furniture system.

By placing the bushing in the module wall, it is easy for a user to insert a fastener through the busing and tighten the fastener to assemble or reassemble the furniture.

Such a furniture module further allows the user to fasten the fastener in abutment to the bushing, so that the when the fastener is tightened the fastener will exert force on the bushing exclusively and not directly on the module wall. Thereby, the risk for disfiguring the outer face of the module wall is significantly decreased. This benefit also facilitates the process of assembling or reassembling the furniture as the user does not have to take into account with what force the fastener should be tightened, thus, saving time and effort in the process of assembling or reassembling the furniture.

Moreover, through the fact that the first axial end face of the bushing is substantially flush or recessed relative the outer face of the module wall, a second module comprising a similar bushing can be arranged so that the outer face of the first module wall abuts the outer face of the second module.

In one embodiment, the outer end faces of the bushings are substantially flush with the outer face of the module wall, such that, when interconnected, the bushings abut each other.

Thereby, the modules can be arranged without any gap in between the two faces, thus preventing e.g. a user from dropping an object into a gap or dust getting collected into such a gap.

In one embodiment, the outer end faces of the bushings are recessed relative to the outer face of the module wall. In a specific embodiment the end faces are 0.1-1 mm recessed relative the outer face of the module wall. In another embodiment the end faces are 0.1-0.5mm recessed relative the outer face of the module wall.

According to another embodiment of the inventive concept the through hole, at both its openings to the end faces, presents a respective portion of increased inner diameter, sized and adapted for receiving a respective head of the fastener, such that the heads, when received in the through holes are substantially flush with or recessed relative the respective end face.

Thereby, there is nothing that protrudes from the end face, which enables that two modules can be arranged in abutment to each other without forming any gap in between.

In one embodiment, the heads of the fastener are recessed relative to the end faces of the bushing. In a specific embodiment the heads of the fastener are 0.1 - 1 mm recessed relative the end faces of the bushing. In another embodiment the heads of the fastener are 0.1-0.5 mm recessed relative the end faces of the bushing.

According to another embodiment of the inventive concept the furniture module may further comprise a blind fastener adapted to at least partially conceal said through hole.

Hence, the fastener hole can be concealed from both the inside and the outside. Furthermore, the blind fastener can prevent objects from falling out from the furniture through the through hole, and also preventing undesired objects from entering the furniture module from the outside through the through hole. Finally, dust and other undesired particles are prevented from collecting in the through hole.

Moreover, such a blind fastener may contribute positively to the esthetical impression of the furniture module.

According to another embodiment of the inventive concept, the through holes in the bushings arranged in the walls of the furniture module which do not abut another furniture module, can function as ventilation.

Thereby, e.g. an A/V furniture module can provide sufficient ventilation for A/V apparatus.

According to yet another embodiment of the inventive concept the axial second end face may be substantially flush with or recessed relative an inner face of the module wall.

Thereby, no protrusion obstructs inside usage of the furniture module. One non-limiting example of such inside usage is if the furniture module is used for book storage, whereby a protrusion on the inside could limit the storage volume or even damage a book cover.

According to yet another embodiment of the inventive concept the blind fastener may comprise a blind bolt and a blind sleeve, wherein the blind bolt presents a length, which corresponds to the length of the bushing, such that when the fastener is received in the through hole, heads of the fastener are substantially flush with or recessed relative to the bushing's end faces, respectively.

Thereby, a fastener can be achieved with well established products resulting in low production cost. Furthermore, the length of the blind bolt enables the fastener to avoid protruding from the module wall, which brings benefits already discussed above.

According to yet another embodiment of the inventive concept the blind bolt is a fastener sleeve joined with a threaded rod.

Thereby, the fastener can consist of two identical sleeves and a threaded rod, which could potentially decrease the production cost even further.

According to yet another embodiment of the inventive concept the bushing may have a larger outer diameter portion and an axially juxtaposed smaller outer diameter portion.

Thereby, a shoulder between the portion with the larger outer diameter and the portion with the smaller outer diameter can receive axial forces exerted from the fastener as it is tightened. Thus, the shoulder would hinder the bushing from sliding out of the bore in the modular wall when axial forces are exerted on the bushing.

According to yet another embodiment of the inventive concept the bushing length may correspond to the module wall's thickness.

Thereby, as earlier discussed, two adjacent furniture modules can abut each other at the same time as two bushings, one in each module, are coupled in abutment and do not protrude beyond the modules' walls.

According to yet another embodiment of the inventive concept one of the bushing is arranged at a plurality of walls of the furniture module.

According to yet another embodiment of the inventive concept the furniture module has one of said bushings in each wall of said furniture module except the back wall.

Thereby, the furniture module can be arranged at any side of another similar furniture module, and they can be coupled in abutment to each other.

According to yet another embodiment of the inventive concept the bushing is arranged at said walls' planar center of gravity or at the wall's geometric center.

By having the bushing in several sides, and by arranging those bushings at the sides' planar center of gravity or at said wall's geometric center, such a module can be arranged in abutment with another module at any of those sides with a bushing. For example, they may be arranged side-by-side (in any order and rotation) or stacked on top of each other (in any order or rotation).

Moreover, having the bushings placed in the planar center of gravity or at said wall's geometric center of each side enables a coupling where only one bushing at each side is needed. Thereby, the time and effort for assembling, disassembling or reassembling the modular furniture is substantially decreased compared to traditional modular furniture which comprise at least two, and often four or more, couplings per side.

Furthermore, by arranging bushings in the planar center of gravity or at said wall's geometric center, it is very easy to reach the coupling and to fasten it compared to traditional modular furniture where the couplings often are arranged along the edges of the furniture walls.

According to second aspect of the present inventive concept, the above-mentioned and other objects are achieved through a furniture module system comprising at least two furniture modules as described above, and a fastener, adapted for interconnecting the modules.

Thereby, a modular furniture can be offered that has a very high flexibility in the arrangements of the different modules, at the same time as the time and effort to assemble, disassemble and reassemble the furniture system is vastly decreased compared to traditional modular furniture.

Moreover, several furniture modules can be added or subtracted from the furniture module system to obtain a desired design and function. Further, a larger modular furniture system can be divided into several modular furniture systems.

According to yet another embodiment of the inventive concept the fastener comprises a fastener bolt and a fastener sleeve, wherein the fastener bolt is arranged to extend through a pair of aligned bushings attached to a respective one of the furniture modules, such that when the fastener is received in the through hole, heads of the fastener are substantially flush with or recessed relative the bushings' inner end faces, respectively.

According to yet another embodiment of the inventive concept the fastener bolt is a fastener sleeve joined with a threaded rod.

Thereby, as discussed above, the fastener can consist of two identical sleeves and a threaded rod, which could potentially decrease the production cost even further.

According to yet another embodiment of the inventive concept the furniture module system type is chosen from the group of furniture comprising storage units, cabinets, closets, shelves, cupboards, TV-storages, AV/Media-storages, sideboards, drawers, bedside tables, or bookcases.

### Breif description of drawings

Above mentioned and other aspects of the inventive concept will now be discussed in detail from the support of drawings, wherein:

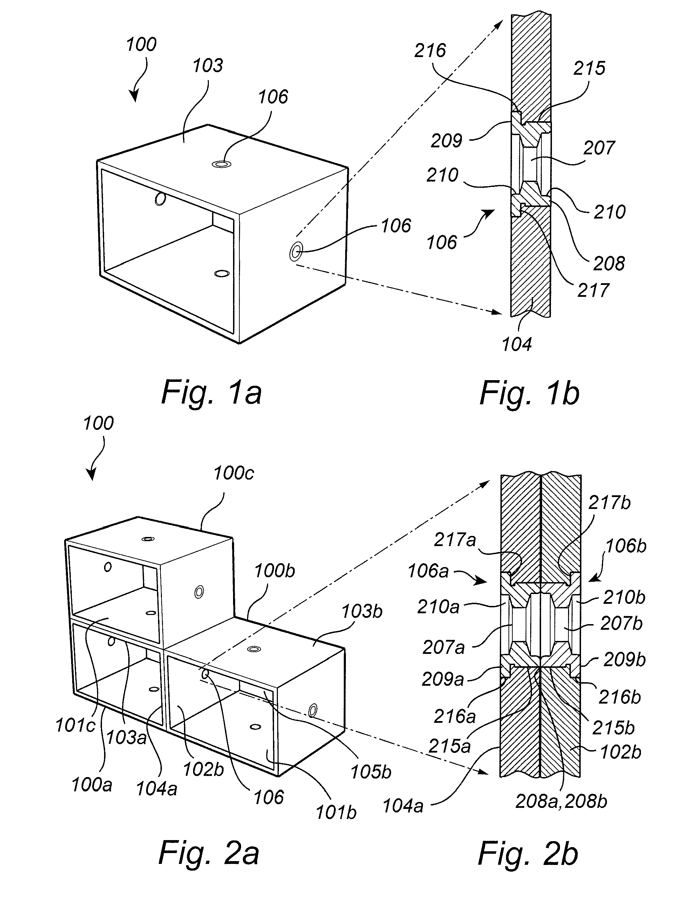

Fig. 1 a schematically illustrates a perspective view of a furniture module with bushings in four sides according to an embodiment of the present inventive concept,
Fig. 1 b schematically illustrates a cross-sectional front view of a module wall with a bushing arranged in a bore in said wall according to another embodiment of the present inventive concept,
Fig. 2a schematically illustrates a perspective view of a furniture module system comprising three furniture modules coupled with said bushings and fasteners, where two of the modules are stacked and the third module is arranged side-by-side with the bottom module according to yet another embodiment of the present inventive concept.
Fig. 2b schematically illustrates a cross-sectional front view of a two adjacent module walls with a bushing arranged in each module wall according to yet another embodiment of the present inventive concept.
Fig. 3 schematically illustrates an exploded perspective view of a bushing and a blind fastener according to yet another embodiment of the present inventive concept.
Fig. 4 schematically illustrates an exploded perspective view of two bushings and a fastener according to yet another embodiment of the present inventive concept.
Fig. 5 schematically illustrates a bushing according to yet another embodiment of the present inventive concept.

### Detailed description of embodiments of the inventive concept

In the following description, a furniture module and a furniture module system comprising a bushing with a circular cross section is mainly discussed.

It should be noted that this by no means should limit the scope of the present inventive concept, which is equally applicable on bushings with other cross-sections, e.g. triangular, quadrangular, rounded shapes or other.

The furniture module may be formed from materials such as solid wood, wood based board (e.g. chip board, flake board, MDF, HDF, wood lamellae), polymer material, polymer composite material or even stone. The module walls may have e.g. a lacquered, oiled or painted surface, or a surface formed of foil, laminate or veneer, or a combination thereof.

The bushing may typically be formed from metal, such as aluminum, aluminum alloy, copper, copper alloy (e.g. brass), iron or iron alloy (such as steel). However, it is conceivable to provide a bushing of plastic material, composite material (polymer+wood; polymer+metal; polymer+mineral filler) or even wood (e.g. solid wood). For example, the bushing may be chosen so as to be made of a material having a higher compressive and/or tensile strength than that of the furniture module wall.

Moreover, certain terminology is used herein for convenience only, and should not limit the scope of the present invention.

In Fig. 1 a a furniture module 100 with bushings 106 is schematically illustrated in a perspective view. The furniture module 100 has a bottom wall 101, a left wall 102, a top wall 103, a right wall 104 as well as a back wall 105. In all walls 101,102,103,104, but the back wall 105, a bushing 106 is arranged. In the embodiment shown, the bushings 106 are located in the planar center of gravity of each of those four walls.

The furniture module 100 illustrated in Fig. 1 a is adapted to receive further interior elements, such as vertical dividers and/or horizontal dividers e.g. shelves. Moreover, the furniture module can be equipped with drawers, doors or other elements.

Moreover, in the specific embodiment illustrated in Fig. 1 a, the furniture module 100 has the same height as depth, which enables very flexible modular furniture, since the furniture module thereby can be rotated so that the backside 105 is turned downwards and still the bottom and top wall 101,103 would be flush with an adjacent similar non-rotated furniture module.

In the illustrated embodiment, the back wall 105 may be constructed from another type of material, and does not need to have a bushing 106 arranged in it. However, in another embodiment, the back wall 105 could comprise a bushing 106, and it could be located at the planar center of gravity or at said wall's geometric center.

In Fig. 1 b a bushing 106 arranged inside a right wall 104 is schematically illustrated in a cross-sectional front view. The bushing 106 is arranged in a bore in said wall 104. Moreover, the bushing 106 has a first axial end face 208 and a second axial end face 209. The first axial end face 208 is substantially flush with the outer face of the right wall 104. However, in some embodiments the first axial end face 208 is recessed relative the outer face of the right wall 104. Moreover, in the illustrated embodiment, the second axial end face 209 is flush with the inner face of the right wall 104. However, in other embodiments the bushing's second en face 209 can be recessed relative the inner face of the right wall 104.

Moreover, the bushing 106 comprises a through hole 207 extending from the first axial end face 208 to the second axial end face 209. The through hole 207 is adapted to receive a fastener.

Further, in the embodiment shown in Fig. 1 a the through hole 207 has two portions 210 with enlarged inner diameter. The two portions 210 are arranged in abutment with said two axial end faces 208, 209, respectively. Thereby a head of a fastener can be countersunk into the portions 210.

The portions 210 may taper from the end face and inwardly.

Moreover, in the embodiment shown in Fig. 1a the bushing 106 has first portion 215 with a smaller outer radius towards the first axial end face 208 and a second portion 216 with a larger outer radius towards the second axial end face 209. Between the first portion 215 and the second portion a shoulder 217 is formed. The shoulder 217 can receive axial forces exerted on the bushing 106.

A bushing having a circular cross section may be arranged in a through hole of the wall, which through hole presents a larger and a smaller diameter portion, corresponding to the portions 215, 216 of the bushing. Such a through hole may be provided by drilling.

In Fig. 2a a module system 200 comprising three furniture modules 100a, 100b, 100c is schematically illustrated in a perspective view according to yet another embodiment of the present inventive concept. The three modules 100a, 100b, 100c are coupled with bushings 106 and fasteners so that two of the modules 100a, 100b are arranged side-by-side and the third module 100c is stacked on top of one of the bottom modules 100a.

The two modules 100a, 100b, that are arranged side-by-side are coupled with said bushings 106 and fastener through a right wall 104a of the first module 100a and the left wall 102b of the second module 100b. Further, the third module 100c stacked on top of the first module 100a, is also arranged with said bushings 106 and fasteners. The third 100c and first modules 100a are coupled through the top wall 103a of the first module 100a and the bottom wall 101 c of the third module 100c.

Further, in the disclosed embodiment in Fig. 2a the furniture modules 100a, 100b, 100c have the same height as depth, which enables very flexible modular furniture as earlier discussed. For example, the modular system 200 could be rearranged so that the second module 100b is rotated so that the backside 105b is turned downwards and the bottom and top wall 101 b, 103b flush with the front and back side of the first module 100a, respectively. Thereby, the second module 100b could be used for boxlike storage or equivalent.

It is noted that the first axial end face 208 of the bushing is exposed as an annular portion at the outer face of the module wall, surrounding the head of the fastener or blind bolt. For example, the annular portion may present a radial width of more than 0.5 mm, preferably 1-3 mm.

Similarly, the second axial end face 209 of the bushing is exposed as an annular portion at the inner face of the module wall, surrounding the other head of the fastener or blind bolt. This annular portion may be larger than the one on the outer face of the module wall, e.g. presenting a radial width of more than 1 mm, preferably 2-5 mm.

In Fig. 2b two bushings 106a 106b arranged inside two adjacent module walls 104a 102b, respectively, are schematically illustrated in a cross-sectional front view according to yet another embodiment of the present inventive concept.

The left part of Fig. 2b, i.e. the wall 104a and bushing 106a of the first module 100a, corresponds to a portion of the first module as shown in fig 2a and is similar to the cross-sectional view shown in Fig. 1 b. Further, the right part of fig 2b, correspond to the second module 100b shown in fig 2a, where the bushing 106b and wall 102b is the left wall of the second module 100b.

In the illustrated embodiment the two bushings' 106a, 106b first axial end faces 208a, 208b are flush with the outer face of the walls 104a, 102b and said end faces are arranged in abutment and facing each other. Thereby, the axial force exerted from a fastener on the second end faces 209a, 209b can be received by the first axial faces 208a, 208b, respectively.

However, in another embodiment, the two end faces 208a, 208b are recessed relative the outer faces of the walls 104a, 102b, thus, said first end faces being spaced apart.

Furthermore, the bushings 106a, 106b comprise a through hole 207 extending from the first axial end faces 208a, 208b to the second axial end faces 209a, 209b, respectively. The through holes 207 are adapted to receive a fastener.

Further, in the embodiment shown in Fig. 2a the through holes 207a, 207b each have two portions 210 with enlarged inner diameter. The portions 210 are arranged in abutment with the axial end faces 208a 208b, 209a, 209b, respectively. Thereby heads of a fastener can be countersunk into the portions 210.

Moreover, in the embodiment shown in Fig. 2b the bushings 106a, 106b has first portion 215a, 215b with a smaller outer radius towards the first axial end faces 208a, 208b and a second portion 216a, 216b with a larger outer radius towards the second axial end faces 209a, 209b. Thereby, each bushing comprise a shoulder 217a, 217b which enables the bushings 106a, 106b to receive axial forces exerted by a fastener which holds the two walls 102b, 104a of the two furniture modules 100a, 100b together.

Although not illustrated in a the figures, in one embodiment, the coupling between the first module 100a and the third module 100c in Fig. 2a may have a similar coupling as described in Fig. 2b, however, that couplings' orientation may be rotated to be adapted for the top wall 103a and bottom wall 101 c, respectively.

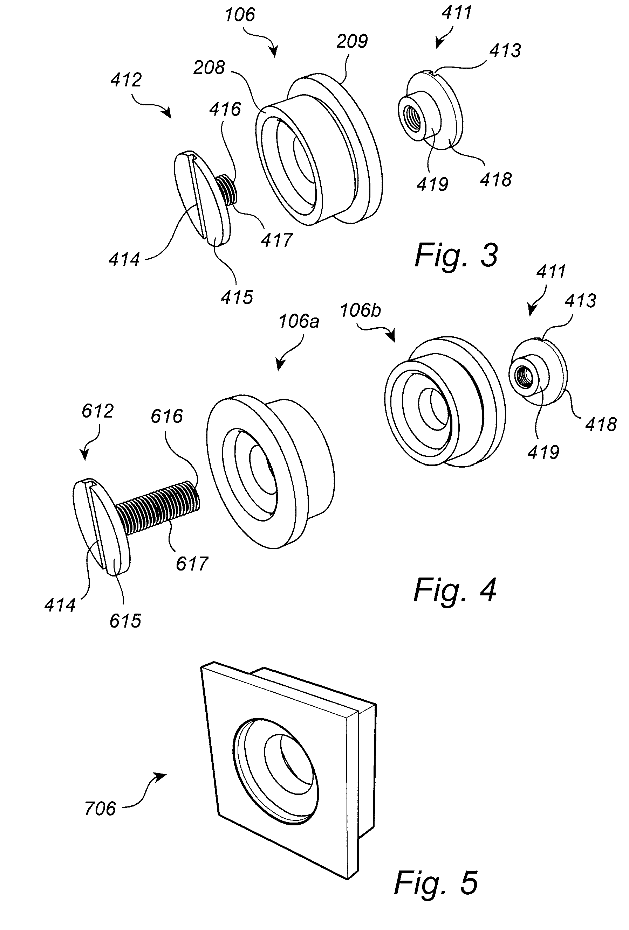

In Fig. 3 schematically a bushing 106 and a blind fastener is illustrated in an exploded perspective view according to yet another embodiment of the present inventive concept.

In the embodiment shown, the fastener comprises a blind bolt 412 and a blind sleeve 411. The blind bolt 412 comprises a head 415 and a rod 416, wherein a portion 417 of the rod 416 has threads. Further the head 415 has a slotted drive 414 design. The sleeve 411 has a head 418 and a bore 419, wherein the bore 419 has threads corresponding to the threads at said portion 417 of the bolt rod 416. Further, the head 418 of the sleeve 411 has a slotted drive 413 design. However in other embodiments the head 418 of the sleeve 411 can have another drive design such as a Philips, hex, torx, spline drive or other.

Moreover, in Fig. 3 the rod 416 of the blind bolt 412 has a length corresponding to the length of the bushing 106. Thereby, the bolt 412 and the sleeve 411 can be used for concealing the through hole 207. The coupling shown in fig 5 can therefore be arranged in a module before the module is assembled with other adjacent modules, or if the module will be an end module in a modular furniture system.

Moreover, the bushing 106 as shown has a circular cross section however, in other embodiments the cross-sections may be e.g. triangular, quadrangular or other.

However, if the busing is rotational symmetric, a lathe can be used and production is facilitated, and thereby cost can be kept down. Then again, there are alternative production methods like punching, pressing or casting which make other cross-sections of the bushing 106 applicable.

Moreover, in the embodiment shown in Fig. 3, the bushing's 106 first 208 and second 209 axial end faces are larger than the bolt head 415 and the sleeve head 418, respectively. Thereby, when the modular furniture coupling is tightened the bolt head 415 and the sleeve head 418 only exert force on said the bushing 106, and not on the wall 104 in which the bushing is arranged.

In Fig. 4 two bushings 106a, 106b and a fastener is schematically illustrated in an exploded perspective view according to yet another embodiment of the present inventive concept.

The embodiment shown in fig 6 is similar to the one shown in Fig. 3, apart from that this embodiment includes two bushings 106a, 106b instead of one and that in this embodiment the fastener is replaced. However, the fastener in this embodiment is similar to the fastener in Fig. 3, in fact the sleeve 411 is identical with its sleeve head 418, sleeve bore 419 and slotted drive 413 design. The difference is that the fastener bolt 614 has a longer rod 616 which present a length corresponding to the aggregated length of the two bushings 106a, 106b. Thereby, the sleeve 411 and the bolt 614 are adapted to mesh through the two bushings 106a, 106b to couple two furniture modules 100a, 100b.

Moreover, the bushings 106a, 106b are adapted to be arranged as shown in Fig. 2b, inside the furniture modules' 100a, 100b two walls 104a, 102b, respectively.

In both embodiments shown in Fig. 5 and Fig. 6, the bolt heads 415, 615 and the sleeve heads 418 have a slotted drive 413, 414 design with a slot width of 1,9 - 2,2 mm. That slot width enables a coin to function as a "screwdriver" for tightening the fastener.

In Fig. 5 a bushing 706 is schematically illustrated according to yet another embodiment of the present inventive concept.

In this embodiment the bushing 706 has a quadrangular cross-section.

It is noted that other geometries of the through hole may be provided by using e.g. milling cutting. Notably, the smaller and/or larger diameter portion 215, 216 of the bushing may be provided with a non-circular cross section. For example, the portions 215, 216 may have geometrically different cross sections, which may thus operate so as to counteract rotation of the bushing.

The exposed end faces 208, 209 may be of the same material as the rest of the bushing. They may be processed, e.g. polished, honed or brushed. In the alternative, they may be provided with a surface coating, such as paint, polymer resin, anodized, etc.

The fastener and/or the fastener heads may be provided with a surface treatment which is the same as that of the bushing, or it may be provided with a different surface treatment, e.g. in order to provide a contrast to the bushing.

## Claims

1. A furniture module (100) adapted for being interconnected to another, similar furniture module (100b) in a state where outer faces of said modules face and abut each other,
wherein the furniture module (100) comprises a bushing (106), which is fixedly received in a bore in a wall (101, 102, 103, 104) of the module,
wherein said bushing (106) presents a through hole (207), for receiving a fastener,
wherein said bushing (106) has a first axial end face (208), which is substantially flush with or recessed relative the outer face of the module wall (101, 102, 103, 104), and an opposing axial second end face (209), and
wherein the through hole (207), at its opening to at least one of the end faces (208, 209), presents a portion (210) of increased inner diameter, sized and adapted for receiving a head (415, 418, 615) of the fastener, such that the head, when received in the through hole (207) is substantially flush with or recessed relative that end face (208, 209).

2. The furniture module (100) as claimed in claim 1, wherein the through hole (207), at both its openings to the end faces (208, 209), presents a respective portion (210) of increased inner diameter, sized and adapted for receiving a respective head (415, 418, 615) of the fastener, such that the heads, when received in the through holes (207) are substantially flush with or recessed relative the respective end face (208, 209).

3. The furniture module (100) as claimed in any one of the preceding claims, further comprising a blind fastener, adapted for at least partially concealing said through hole.

4. The furniture module as claimed in any one of the preceding claims, wherein the axial second end face (209) is substantially flush with an inner face of the module wall (101, 102, 103, 104).

5. The furniture module (100) as claimed in claim 3 or 4, wherein the blind fastener comprises a blind bolt (412) and a blind sleeve (411), wherein the blind bolt presents a length, which corresponds to the length of the bushing (106), such that when the fastener is received in the through hole (207), heads (415, 418) of the fastener are substantially flush with or recessed relative the bushing's end faces (208, 209), respectively.

6. The furniture module (100) as claimed in claim 5, wherein the blind bolt (412) is a fastener sleeve joined with a threaded rod.

7. The furniture module (100) as claimed in any one of the preceding claims, wherein said bushing (106) having a larger outer diameter portion (216) and an axially juxtaposed smaller outer diameter portion (215).

8. The furniture module (100) as claimed in any one of the preceding claims, wherein said bushing length correspond to said module wall's (104) thickness.

9. The furniture module (100) as claimed in any one of the preceding claims, wherein one of said bushing (207) is arranged at a plurality of walls (101, 102, 103, 104) of said furniture module.

10. The furniture module (100) as claimed in claim 9, wherein said furniture module has one of said bushing (207) in all walls (101; 102;103;104) of said furniture module except the back wall (105).

11. The furniture module (100) as claimed in any one of the preceding claims, wherein said bushing (207) is arranged at said walls' planar center of gravity or at said wall's geometric center.

12. A furniture module system (200), comprising at least two furniture modules (100a, 100b, 100c) as claimed in any one of the preceding claims, and a fastener, adapted for interconnecting said modules.

13. The furniture module system (300) as claimed in claim 12,
wherein the fastener comprises a fastener bolt (612) and a fastener sleeve (411), wherein the fastener bolt (612) is arranged to extend through a pair of aligned bushings (106a, 106b) attached to a respective one of the furniture modules (100a, 100b), such that when the fastener is received in the through hole (207a, 207b), heads (418, 615)of the fastener are substantially flush with or recessed relative the bushings' inner end faces, respectively.

14. The furniture module system as claimed in claim 13, wherein the fastener bolt is a fastener sleeve joined with a threaded rod.

15. The furniture module system as claimed in any of claim 12-14, wherein the furniture module system type is chosen from the group of furniture comprising storage units, cabinets, closets, shelves, cupboards, TV-storages, AV/media-storages, sideboards, drawers, bedside tables, or bookcases.
